# EUROPEAN PATENT APPLICATION

(11) **EP 1 916 792 A1**
(43) Date of publication of application: **30.04.2008**
(21) Application number: 06757123.2
(22) Date of filing: 07.06.2006
(51) Int. Cl.: H04J 15/00, H03M 13/47, H04B 7/08, H04L 1/20

(54) **RECEIVER APPARATUS**

(30) Priority: 18.08.2005 JP 2005237778
(71) Applicant: MITSUBISHI ELECTRIC CORPORATION, Chiyoda-ku Tokyo 100-8310 (JP)
(72) Inventor: HIGASHINAKA, Masatsugu, Tokyo 100-8310 (JP)
(74) Representative: Nicholls, Michael John
(86) International application number: PCT/JP2006/311416
(87) International publication number: WO 2007/020745

(57) **Abstract**

A digital signal demodulating unit (103) includes a desired-signal transmission-path estimating unit (200) that performs transmission path response matrix estimation for a desired signal; an interference-signal transmission-path estimating unit (201) that performs transmission path response matrix estimation for an interference signal; a combined-transmission-path matrix generating unit (202) that combines the estimated transmission path response matrix of the desired signal and the estimated transmission path response matrix of the interference signal to generate a combined transmission path response matrix; a matrix calculating unit (203) that converts into an upper triangular matrix the combined transmission path response matrix after the combining; a hypersphere generating unit (204) that generates a hypersphere centering on a reception signal point in a lattice point space; and a symbol searching unit (205) that forms the lattice point space from the combined transmission path response matrix converted into the upper triangle, the symbol searching unit searching a lattice point having the smallest metric to the reception signal point among lattice points present in the hypersphere to determine the lattice point as estimate values of the desired signal and interference signal.

## Description

### TECHNICAL FIELD

The present invention relates to a technology of reducing a calculation amount in a maximum-likelihood determination method used for desired signal determining operations in digital communications and, particularly, relates to a technology of determining appropriate desired signals with a low calculation amount in an environment where an interference signal transmitted using the same frequency band arrives at a receiver along with a desired signal, such as cellular mobile communication network systems.

### BACKGROUND ART

In mobile communication network systems configured by a plurality of cells such as portable phones and PHS (Personal Handyphone System), effects of interference wave from adjacent cells may exist since the same frequency channel is relocated. For example, in a mobile communication network system including a base station A, a mobile station a communicating with the base station A, a base station B adjacent to the base station A, and a mobile station b communicating with the base station B, although a cell of the radio wave of the base station A are different from a cell of the radio wave of the base station B, the cells may partially overlap. Although the mobile station a is not located at the cell of the radio wave of the base station B, the mobile station a receives the radio wave from the base station B. Therefore, if signals of the same frequency channel are transmitted from the base station A and the base station B, some of the radio wave from the base station B arrives depending on where the mobile station a exists. Therefore, this may be sufficient to act as an interference wave when the mobile station a receives a desired signal from the base station A in some situations. In such an environment where an interference signal transmitted using the same frequency band arrives along with a desired signal, the mobile station a must determine an appropriate desired signal.

On the other hand, a maximum-likelihood determination method is conventionally and widely proposed as a desired signal (transmission signal) determining method in the digital communication field. In this maximum-likelihood determination method, metrics are calculated between replicas, which is created from transmission path responses and transmission symbol candidates (transmission signal candidates), and reception signals in a receiving apparatus, and a replica with the smallest metric is found out among all the combinations to output a corresponding transmission symbol candidate as a decision signal. A receiving apparatus having an excellent reception capability may be formed by using this maximum-likelihood determination method. However, since the metrics are calculated for all the possible combinations, this maximum-likelihood determination method usually involves an enormous amount of calculations. In this regard, sphere decoding (hereinafter, SD) of non-patent document 1 is proposed as a calculation amount reduction technology for the maximum-likelihood determination method. This is a technology of setting a hypersphere centering on a reception signal point in a lattice point space generated from all the replicas and calculating metrics only for replicas within the hypersphere to reduce the calculation amount.

Non-Patent Document 1: Emanuele Viterbo, Joseph Boutros, "A Universal Lattice Code Decoder for Fading Channels", IEEE Transactions on Information Theory, Vol. 45, No. 5, pp. 1639-1642, July 1999.

### DISCLOSURE OF INVENTION

### PROBLEM TO BE SOLVED BY THE INVENTION

With regard to above non-patent document 1, if no signal acts as interference in a utilized frequency band, a desired signal may be determined with a smaller calculation amount and excellent demodulation characteristics may be acquired. However, calculations cannot efficiently be reduced in an environmental where an interference signal transmitted using the same frequency band arrives along with a desired signal, such as above mobile communication network systems. Therefore, good demodulation characteristics cannot be achieved and improvement has been required.

The present invention was conceived in view of the above situations and it is therefore the objects of the present invention to provide a receiving apparatus that may achieve a low calculation amount to acquire good demodulation characteristics even in the presence of an interference signal.

### MEANS FOR SOLVING PROBLEM

To solve the problems and achieve the object mentioned above, a receiving apparatus according to the present invention includes one or more element antennas that receive high-frequency analog signals; an analog signal processing unit that down-converts each of a plurality of the high-frequency analog signals; an A/D converting unit that converts each of the down-converted analog signals into a digital signal; and a digital signal demodulating unit that demodulates a plurality of the converted digital signals into a predetermined digital signal. The digital signal demodulating unit includes a desired-signal transmission-path estimating unit that performs transmission path response matrix estimation for a desired signal; an interference-signal transmission-path estimating unit that performs transmission path response matrix estimation for an interference signal; a combined-transmission-path matrix generating unit that combines the estimated transmission path response matrix of the desired signal and the estimated transmission path response matrix of the interference signal to generate a combined transmission path response matrix; a matrix calculating unit that converts into an upper triangular matrix the combined transmission path response matrix after the combining; a hypersphere generating unit that generates a hypersphere centering on a reception signal point in a lattice point space; and a symbol searching unit that forms, the lattice point space from the combined transmission path response matrix converted into the upper triangle, the symbol searching unit searching a lattice point having the smallest metric to the reception signal point among lattice points present in the hypersphere to determine the lattice point as estimate values of the desired signal and interference signal.

### EFFECT OF THE INVENTION

According to the receiving apparatus of the present invention, since transmission signal determination is performed with the use of a combined transmission path response matrix including effects of an interference signal, a determination result may be acquired with effects of interference taken into consideration and an appropriate desired signal may be determined even in an environment where an interference signal arrives along with the desired signal such as mobile communication network systems, for example. Since a matrix calculating, unit executes an upper triangular process of the combined transmission path response matrix, a calculation amount may considerably be reduced. Among lattice points existing in a hypersphere centering on a reception signal point in a lattice point space, the lattice point closest to the reception signal point is determined as the transmission signal of the desired and interference signals and, therefore, a calculation amount may further considerably be reduced. When processing a combined transmission path response matrix including the effects of the interference signal, the configuration capable of achieving two characteristic calculation amount reduction effects synergistically functions and exerts a special effect to reduce calculations. As a result, a receiving apparatus may be formed that has good demodulation characteristics in the above environment where an interference signal arrives along with the desired signal.

### BRIEF DESCRIPTION OF DRAWINGS

[Fig. 1] Fig. 1 is a block diagram of an overall configuration of a receiving apparatus of a first embodiment according to the present invention.
[Fig. 2] Fig. 2 is a block diagram of a principal part of a digital signal demodulating unit shown in Fig. 1.
[Fig. 3] Fig. 3 is a view for explaining a method of transmission path response estimation.
[Fig. 4] Fig. 4 is a block diagram of a principal part of a digital signal demodulating unit of a receiving apparatus of a second embodiment according to the present invention.
[Fig. 5] Fig. 5 is a block diagram of a principal part of a digital signal demodulating unit of a receiving apparatus of a third embodiment according to the present invention.
[Fig. 6] Fug. 6 is a block diagram of a principal part of a first signal determining unit shown in Fig. 5.
[Fig. 7] Fig. 7 is a block diagram of a principal part of a second signal determining unit shown in Fig. 5.
[Fig. 8] Fig. 8 is a block diagram of a principal part of a digital signal demodulating unit of a receiving apparatus of a fourth embodiment according to the present invention.
[Fig. 9] Fig. 9 is a block diagram of a principal part of a digital signal demodulating unit of a receiving apparatus of a fifth embodiment according to the present invention.
[Fig. 10] Fig. 10 is a block diagram of a principal part of a second signal determining unit shown in Fig. 9.
[Fig. 11] Fig. 11 is a block diagram of a principal part of a receiving apparatus of a sixth embodiment according to the present invention.
[Fig. 12] Fig. 12 is a block diagram of a principal part of a digital signal demodulating unit shown in Fig. 11.
[Fig. 13] Fig. 13 is a block diagram of an overall configuration of a receiving apparatus of a seventh embodiment according to the present invention.
[Fig. 14] Fig. 14 is a block diagram of a principal part of a digital signal demodulating unit of a receiving apparatus of an eighth embodiment according to the present invention.
[Fig. 15] Fig. 15 is a block diagram of a principal part of a digital signal demodulating unit of a receiving apparatus of a ninth embodiment according to the present invention.
[Fig. 16] Fig. 16 is a block diagram of a principal part of a digital signal demodulating unit of a receiving apparatus of a tenth embodiment according to the present invention.

### EXPLANATIONS OF LETTERS OR NUMERALS

- 100-1 to 100-N, 1200-1 to 1200-N: Antenna
- 101-1 to 101-N, 12'01-1 to 1201-N: Analog signal processing unit
- 102-1 to 102-N, 1202-1 to 1202-N: A/D converting unit
- 1203-1 to 1203-N: Fast Fourier transforming unit (FFT unit)
- 103, 103b, 103c, 103d, 103e: Digital signal demodulating unit
- 200, 301, 501, 701: Desired signal transmission path estimating unit
- 201, 302, 502, 702: Interference signal transmission path estimating unit
- 202, 303, 503, 703, 1302: Combined transmission path matrix generating unit
- 203, 304, 504, 602, 704, 1303: Matrix calculating unit
- 204, 306, 506, 705: Hypersphere generating unit
- 205, 307, 507, 706: Symbol searching unit
- 303: Combined transmission path response matrix generating unit
- 305, 505: Desired component extracting unit
- 401, 801: First signal determining unit
- 402: Replica subtracting unit
- 403, 802: Second signal determining unit
- 601, 900: Second desired-signal transmission-path estimating unit
- 602, 903: Second matrix calculating unit
- 603, 904: Second hypersphere generating unit
- 604, 905: Second symbol searching unit
- 901, 902: Second combined-transmission-path matrix generating unit
- 1001: Digital signal demodulating unit
- 1002: Adder
- 1003: Deinterleaving unit
- 1004: Decoding unit
- 1005: Adder
- 1006: Interleaving unit
- 1101: Signal determining unit
- 1102: Soft decision value generating unit
- 1204: Digital signal demodulating unit
- 1205: Serial/parallel converting unit
- 1301: Interference level estimating unit
- 1401: Signal level estimating unit
- 1402, 150: 1 Correlation calculating unit
- 1502: Ordering unit

### BEST MODE(S) FOR CARRYING OUT THE INVENTION

Embodiments of a receiving apparatus according to the present invention will hereinafter be described in detail with reference to the drawings. The present invention is not limited to the embodiments.

### First Embodiment

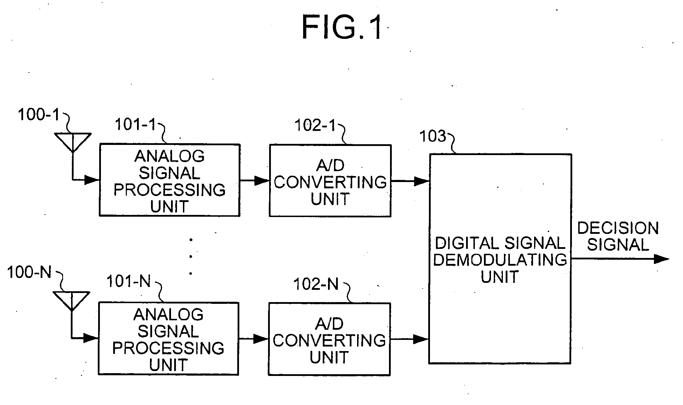

Fig. 1 is a block diagram of an overall configuration of a receiving apparatus of a first embodiment according to the present invention. In Fig. 1, N elements (N is an integer not less than one) of antennas 100-1 to 100-N are connected to N analog signal processing units 101-1 to 101-N, respectively. The N analog signal processing units 101-1 to 101-N are also connected to N A/D converting units 102-1 to 102-N, respectively. The N A/D converting units 102-1 to 102-N are connected to a digital signal demodulating unit 103.

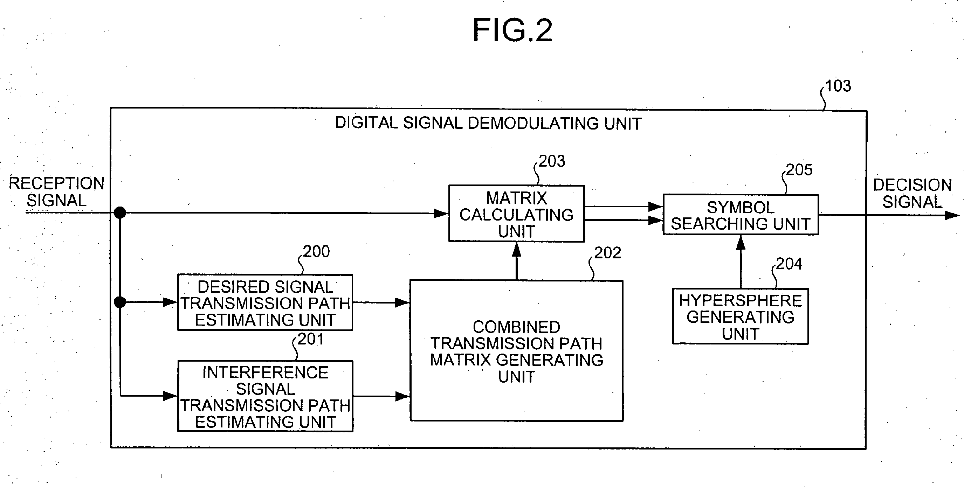

Fig. 2 is a block diagram of a principal part of the digital signal demodulating unit shown in Fig. 1. In Fig. 2, the outputs of the N A/D converting units 102-1 to 102-N (Fig. 1) are input to a matrix calculating unit 203 as well as to a desired-signal transmission-path estimating unit 200 and :an interference-signal transmission-path estimating unit 201. The outputs of the desired-signal transmission-path estimating unit 200 and the interference-signal transmission-path estimating unit 201 are input to a combined-transmission-path matrix generating unit 202. The output of the combined-transmission-path matrix generating unit 202 is input to the matrix calculating unit 203. The outputs of the matrix calculating unit 203 and a hypersphere generating unit 204 are input to a symbol searching unit 205. The symbol searching unit 205 outputs a decision signal.

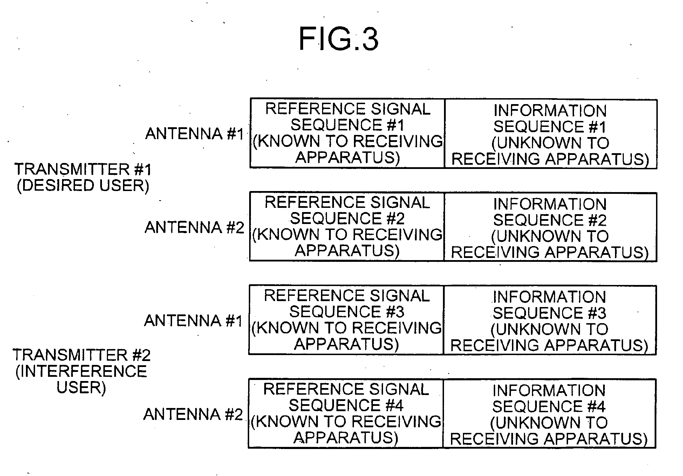

A desired signal and an interference signal will be described. When a reception signal vector is input to a receiving apparatus, a desired signal and an interference signal cannot be distinguished. However, for example, a propagation path response matrix may be estimated by inserting a known signal sequence between transmission and reception sides. By way of example, assuming that each of two transmitters #1 and #2 concurrently transmits transmission signals from two antennas #1 and #2 in a signal format shown in Fig. 3, since it is known that different reference signal sequences #1 to #4 are transmitted from the antennas of the transmitters, reference signal sequence portions may be detected with correlation calculations, etc., and the reference signal sequence portions may be used to estimate responses of propagation paths through which the signal pass.

Referring to Fig. 1 again, an outline of the overall operation of the receiving apparatus of this embodiment will be described. The analog signal processing units 101-1 to 101-N connected to the antennas execute an analog signal process such as down-converting for high-frequency analog signals received with the antennas 100-1 to 100-N. The down-converted signals are converted by the A/D converting units 102-1 to 102-N into digital signals, which are output to the digital signal demodulating unit 103. The digital signal demodulating unit 103 is a feature of this embodiment and executes a demodulating process to acquire a decision signal.

The operation of the digital signal demodulating unit 103 will be described in detail with reference to Fig. 2. For simplicity of description, it is assumed in the following description that one transmitter transmitting a desired signal and one transmitter transmitting an interference signal exist and that the transmission signals from the transmitters arrive at a receiver. However, the embodiment is not limited to this case and can be applied to a more generalized environment with the increased number of transmitters.

To the digital signal demodulating unit 103, N systems of base band digital signals output from the A/D converting units 102-1 to 102-N (Fig. 1) are input. These input signals are hereinafter represented as an Nth dimensional reception signal vector for convenience. First, this Nth dimensional reception signal vector is used in the desired-signal transmission-path estimating unit 200 and the interference-signal transmission-path estimating unit 201 to perform the transmission path response matrix estimation of the desired signal and the transmission path response matrix estimation of the interference signal. These transmission path response matrix estimations are executed with the technique described in Fig. 3 and, specifically, may be executed with an already widely known technique, for example, the least-square method.

If the transmitter concurrently transmits signals from M elements (M is an integer not less than one) of mounted antennas at the same time point with the same frequency, each propagation path response matrix may be represented by a size of M-rows and N-columns, using the number N of antennas used in the receiver. Although this matrix of M-rows and N-columns may be a vector or simply a scalar depending on the values of M and N, expressions including such cases are unified to a propagation path response matrix in this description. Of course, the present invention can directly be applied even when the propagation path response matrix becomes a vector or scalar.

The outputs of the desired-signal transmission-path estimating unit 200 and the interference-signal transmission-path estimating unit 201 are input to the combined-transmission-path matrix generating unit 202. The combined-transmission-path matrix generating unit 202 combines the estimated transmission path response matrix of the desired signal and the transmission path response matrix of the interference signal to generate one combined transmission path response matrix having a larger size. The combined-transmission-path matrix generating unit 202 outputs this combined transmission path response matrix to the matrix calculating unit 203.

. The matrix calculating unit 203 includes a matrix multiplication function, an inverse matrix calculating function, and an upper triangular matrix conversion function. The input signals to the matrix calculating unit 203 are the reception signal vector and the combined transmission path response matrix. The matrix calculating unit 203 executes an upper triangular process (conversion into an upper triangular matrix) for the input combined transmission path response matrix and outputs the result to the symbol searching unit 205. The upper triangular process may be executed by using a widely known mathematical method, for example, QR decomposition or Cholesky decomposition. The matrix calculating unit 203 calculates the inverse matrix of the combined transmission path response matrix and multiplies the input reception signal vector by this inverse matrix. The result is also output to the symbol searching unit 205.

The hypersphere generating unit 204 uses an appropriate radius setting criterion to generate a hypersphere centering on a reception signal point in a lattice point space created from transmission signal candidates including the interference signal and the combined transmission path response matrix. The reception signal point is a point indicated by the above reception signal vector including elements that are the reception signal converted into the digital signals by the A/D converting units 102-1 to 102-N, and is one point in the lattice point space. On the other hand, the radius setting criterion for the hypersphere may be any criterion such as noise dispersion, reception signal power, and suitable fixed values, for example. A plurality of criteria can be used. That is, the radius setting criterion may be any configuration as long as at least one lattice point is included.

The symbol searching unit 205 inputs the process result of the matrix calculating unit 203 to form a lattice point space created from the transmission signal candidates of desired and interference signals and the combined transmission path response matrix. The symbol searching unit 205 also inputs the process result of the hypersphere generating unit 204 to calculate a metric to the reception, signal point for each lattice point existing in a hypersphere centering on the reception signal point in the created lattice point space and searches for a lattice point having the smallest metric. The lattice point closest to the reception signal point is determined as the transmission signal of the desired and interference signals. From the determination result, only the components corresponding to the desired-signal are extracted and output as a decision signal. If necessary, a decision signal including the interference signal can be output without extracting only the desired signal components. When searching for the lattice point having the smallest metric, the searching may be started from a lattice point expected to be in the vicinity of the reception signal point to calculate metrics for the predetermined number of lattice points.

According to this embodiment, since the transmission signal determination is performed with the use of the combined transmission path response matrix including effects of the interference signal as above, a determination result can be acquired with effects of interference taken into consideration and, as a result, an appropriate desired signal can be determined even in an environment where an interference signal arrives along with the desired signal such as mobile communication network systems, for example. Since the matrix calculating unit 203 executes the upper triangular process of the combined transmission path response matrix, a calculation amount may considerably be reduced. Since only the lattice points existing in a hypersphere centering on the reception signal point are used as targets of determination in the lattice point space to determine the lattice point closest to the reception signal point as the transmission signal of the desired and interference signals, a calculation amount may further considerably be reduced. When processing a large-sized combined transmission path response matrix including the transmission path response matrix of the interference signal, the configuration expected to exert two characteristic calculation amount reduction effects synergistically functions and exerts a special effect. As a result, a receiving apparatus may be formed that has good demodulation characteristics in the above environment where the interference signal arrives along with the desired signal. The range of the present invention does not limited by this embodiment and other configuration having the same effect also fall within the range thereof.

### Second Embodiment

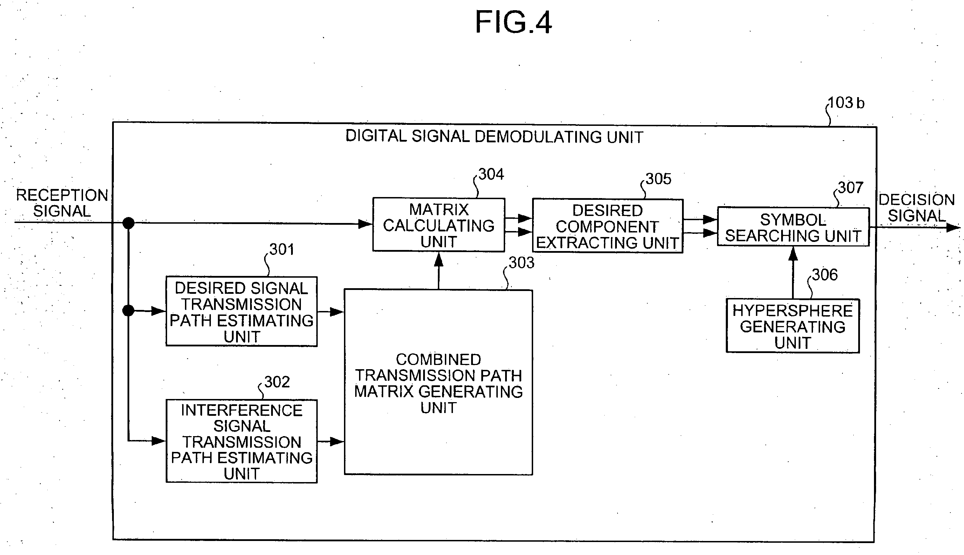

Fig. 4 is a block diagram of a principal part of a digital signal demodulating unit of a receiving apparatus of a second embodiment according to the present invention. In Fig. 4, the outputs of the N A/D converting units 102-1 to 102-N (Fig. 1) are input to a matrix calculating unit 304 of a digital signal demodulating unit 103b as well as to a desired-signal transmission-path estimating unit 301 and an interference-signal transmission-path estimating unit 302. The outputs of the desired-signal transmission-path estimating unit 301 and the interference-signal transmission-path estimating unit 302 are input to a combined-transmission-path matrix generating unit 303. The output of the combined-transmission-path matrix generating unit 303 is input to the matrix calculating unit 304. The output of the matrix calculating unit 304 is input to a desired component extracting unit 305. The outputs of the desired component extracting unit 305 and a hypersphere generating unit 306 are input to a symbol searching unit 307. The symbol searching unit 307 outputs a decision signal. A feature of the receiving apparatus of this embodiment is included in the combined-transmission-path matrix generating unit 303 and the desired component extracting unit 305 of the digital signal demodulating unit 103b. Other constituent elements are generally the-same as those of the first embodiment.

First, the desired-signal transmission-path estimating unit 301 and the interference-signal transmission-path estimating unit 302 execute the same processes as the desired-signal transmission-path estimating unit 200 and the interference-signal transmission-path estimating unit 201 to estimate the transmission path response matrices. The combined-transmission-path matrix generating unit 303 inputs the transmission path response matrices estimated by the desired-signal transmission-path estimating unit 301 and the interference-signal transmission-path estimating unit 302 to generate a combined transmission path response matrix. The combined-transmission-path matrix generating unit 303 of this embodiment generates the combined transmission path response matrix such that a term associated with the interference signal and a term associated with the desired signal are stored with a smaller column number and a larger column number, respectively, when the combined transmission path response matrix is converted into an upper triangle by the matrix calculating unit 304 on the subsequent stage. The matrix calculating unit 304 executes the same process as the matrix calculating unit 203 of the first embodiment.

The desired component extracting unit 305 extracts only the desired signal components and the arbitrary number of the interference signal components from the input reception signal after the inverse matrix calculation and the combined transmission path response matrix converted into the upper triangle to perform reconfiguration into a lower-dimensional combined transmission path response matrix. With regard to the combined transmission path response matrix converted into the upper triangle and input to the desired component extracting unit 305, a component associated with the interference signal is stored in a portion having a smaller column number and a component associated with the desired signal is stored in a portion having a larger column number, because of the process of the combined transmission path response matrix generating unit 303 as described above. Therefore, when performing the reconfiguration into the lower-dimensional matrix in the desired component extracting unit 305, an element may directly be extracted that is stored in the lower right of the combined transmission path response matrix converted into the upper triangle. The desired component extracting unit 305 outputs the reconfigured combined transmission path response matrix to the symbol searching unit 307.

The hypersphere generating unit 306 performs the same operation as the hypersphere generating unit 204 of the first embodiment. That is, a hypersphere centering on a reception signal point is generated in a lattice point space created from transmission signal candidates including the interference signal and the combined transmission path response matrix. The dimension of the lattice point space considered here may be a lower dimension corresponding to the number of signals extracted by the desired component extracting unit 305. That is, the radius setting criterion of the hypersphere may be a smaller criterion corresponding to the lower dimension of the matrix.

The symbol searching unit 307 receives signals from the desired component extracting unit 305 and the hypersphere generating unit 306, calculates metrics between lattice points existing within the hypersphere centering on the reception point and the reception-signal point in the lattice point space created from the lower-dimensional transmission signal candidates corresponding to the number of signals extracted by the desired component extracting unit 305 and the combined transmission path response matrix, and determines the smallest lattice point as the arriving signal.

According to this embodiment, since the determination process is executed after the desired component extracting unit extracts only the desired signal components and the arbitrary number of the interference signal components, the dimension (matrix) to be considered is reduced and a calculation amount may further considerably be reduced.

### Third Embodiment

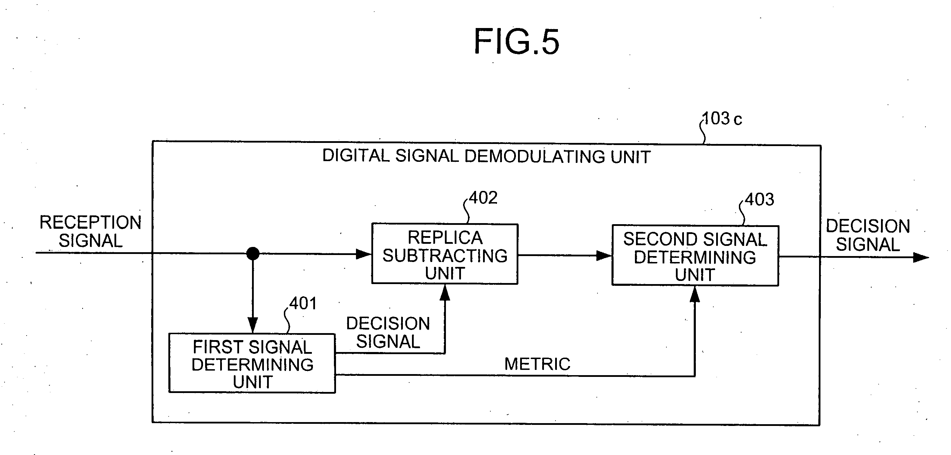

Fig. 5 is a block diagram of a principal part of a digital signal demodulating unit of a receiving apparatus of a third embodiment according to the present invention. A digital signal demodulating unit 103c is a feature of this embodiment and includes a first signal determining unit 401 that executes a signal determination process with the reduced dimension (matrix) to be considered, a replica subtracting unit 402 that detects and removes the interference signal components, and a second signal determining unit 403 that detects the desired signal components from the signal with the interference signal components removed. In Fig. 5, the outputs of the N A/D converting units 102-1 to 102-N (Fig. 1) are input to the first signal determining unit 401 and the replica subtracting unit 402. Among the outputs of the first signal determining unit 401, the decision signal is output, to the replica subtracting unit 402 and the metrics are output to the second signal determining unit 403. The output of the replica subtracting unit 402 is input to the second signal determining unit 403. The second signal determining unit 403 outputs the decision signal..

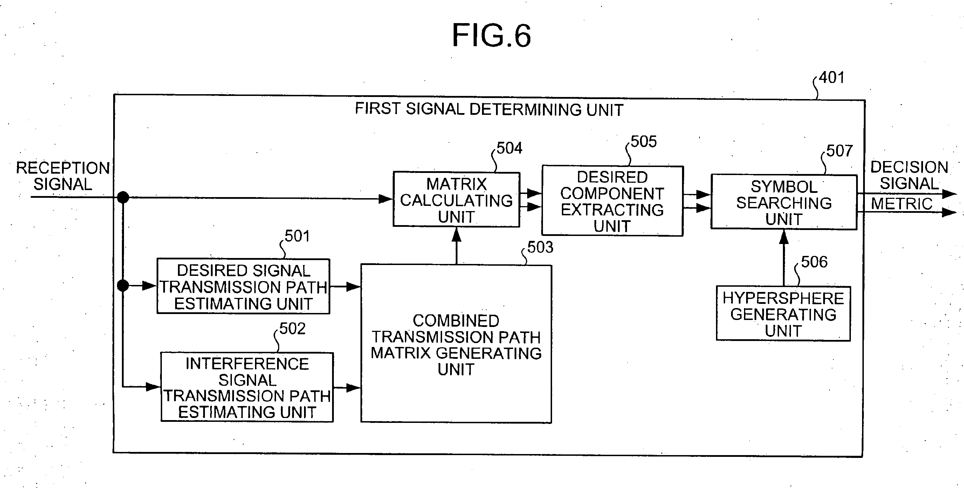

Fig. 6 is a block diagram of a principal part of the first signal determining unit 401 shown in Fig. 5. In Fig. 6, the outputs of the N A/D converting units 102-1 to 102-N (Fig. 1) are input to a matrix calculating unit 504 of the digital signal demodulating unit 103b as well as to a desired-signal transmission-path estimating unit 501 and an interference-signal transmission-path estimating unit 502. The outputs of the desired-signal transmission-path estimating unit 501 and the interference-signal transmission-path estimating unit 502 are input to a combined-transmission-path matrix generating unit 503. The output of the combined-transmission-path matrix generating unit 503 is input to the matrix calculating unit 504. The output of the matrix calculating unit 504 is input to a desired component extracting unit 505. The outputs of the desired component extracting unit 505 and a hypersphere generating unit 506 are input to a symbol searching unit 507. The symbol searching unit 507 outputs a decision signal and metrics.

A difference between the first signal determining unit 401 of the first embodiment and the digital signal demodulating unit 103b of the second embodiment is that not only the decision signal but also the metrics calculated in the symbol searching unit 507 are output as the process result. Contrary to the second embodiment, the combined-transmission-path matrix generating unit 503 generates the combined transmission path response matrix such that a term associated with the desired signal and a term associated with the interference signal are stored with a smaller column number and a larger column number, respectively, when the combined transmission path response matrix is converted into an upper triangle as the combined transmission path matrix by the matrix calculating unit 504.

After the matrix calculating unit 504 executes the same matrix calculation process as the matrix calculating unit 304 of the second embodiment, the desired component extracting unit 505 extracts only the arbitrary number of the signal components including a portion corresponding to the interference signal components from the input reception signal vector after the inverse matrix calculation and the combined transmission path response matrix converted into the upper triangle to perform reconfiguration into a lower-dimensional matrix. The reconfigured signal is output to the symbol searching unit 507. The hypersphere generating unit 506 and the symbol searching unit 507 perform the same operation as the hypersphere generating unit 306 and the symbol searching unit 307 of the second embodiment and the decision signal and metrics are output as the final process result.

The replica subtracting unit 402 receives the decision signal from the first signal determining unit 401, executes a process of subtracting the replica of the interference signal components from the reception signal, and outputs the signal to the second signal determining unit 403.

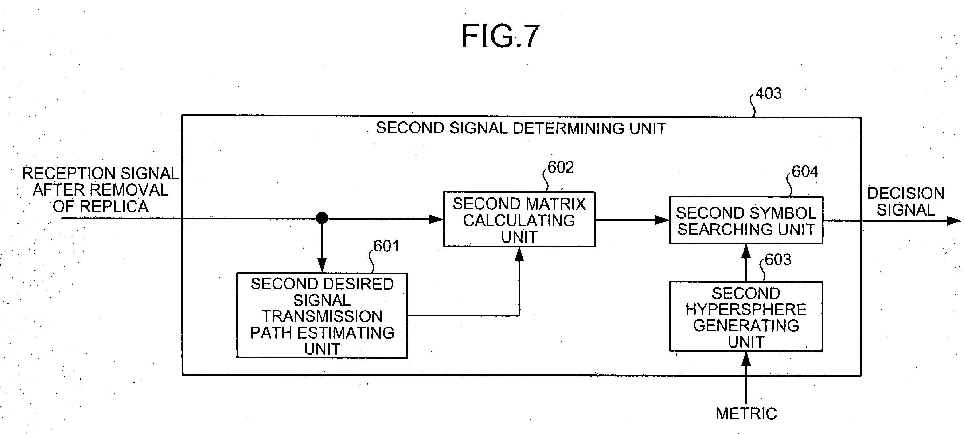

Fig. 7 is a block diagram of a principal part of the second signal determining unit 403 shown in Fig. 5. In Fig. 7, the reception signal after the removal of the' replica is input to a matrix calculating unit and a second desired-signal transmission-path estimating unit 601. The output of the second desired-signal transmission-path estimating unit 601 is input to the second matrix calculating unit 602. The outputs of the second matrix calculating unit 602 and a second hypersphere generating unit 603 are input to a second symbol searching unit 604. The second symbol searching unit 604 outputs a decision signal.

The second signal determining unit 403 has a configuration formed by removing the constituent elements related to the interference signal, i.e., the interference-signal transmission-path estimating unit and the combined-transmission-path matrix generating unit from the configuration of the digital signal demodulating unit 103 of the second embodiment shown in Fig. 4. The second desired-signal transmission-path estimating unit 601 estimates a transmission path response matrix of the desired signal from the reception signal after the removal of the replica. The second matrix calculating unit 602 executes the same process as the matrix calculating unit 304 of the second embodiment and outputs the process result to the second symbol searching unit 604. The second hypersphere generating unit 603 generates a hypersphere centering on a reception signal point in a second lattice point space created from transmission signal candidates and the transmission path response matrix, based on the metrics delivered from the first signal determining unit 401. The second symbol searching unit 604 inputs the process results of the second matrix calculating unit 602 and the second hypersphere generating unit 603, calculates metrics between lattice points existing within the hypersphere centering on the reception point and the reception signal point in the second lattice point space created from the transmission signal candidates and the transmission path response matrix of the desired signal, and determines the smallest lattice point as the transmission signal.

According to this embodiment, since the interference signal components are first detected and removed using a signal determining process with the reduced dimension (matrix) to be considered and the desired signal components are then also detected using a signal determining process with the reduced dimension (matrix), a lower calculation amount and a highly accurate demodulating process can be achieved.

In another configuration example of this embodiment, the first signal determining unit 401 may output the transmission path response matrix of the desired signal to the second signal determining unit 403 and the second signal determining unit 403 may not have the desired-signal transmission-path estimating unit. Alternatively, instead of the second signal determining unit 403, a circuit including the same function as the first signal determining unit 401 may be used to determine the interference signal as well. In this case, pluralities of the replica subtracting units and signal determining units may be included in the subsequent stage to repeatedly perform the signal determination and the replica subtraction. The method of setting the hypersphere may be any techniques other than those described here.

### Fourth Embodiment

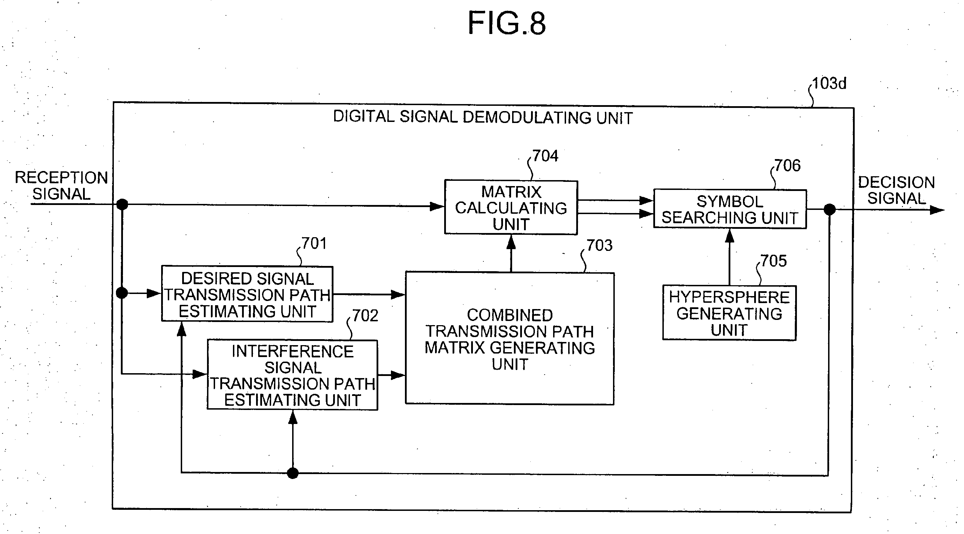

Fig. 8 is a block diagram of a principal part of a digital signal demodulating unit of a receiving apparatus of a fourth embodiment according to the present invention, In Fig. 8, the outputs of the N A/D converting units 102-1 to 102-N (Fig. 1) are input to a matrix calculating unit 704 of a digital signal demodulating unit 103d as well as to a desired-signal transmission-path estimating unit 701 and an interference-signal transmission-path estimating unit 702. The outputs of the desired-signal transmission-path estimating unit 701 and the interference-signal transmission-path estimating unit 702 are input to a combined-transmission-path matrix generating unit 703. The output of the combined-transmission-path matrix generating unit 703 is input to the matrix calculating unit 704. The outputs of the matrix calculating unit 704 and a hypersphere generating unit 705 are input to a symbol searching unit 706. The symbol searching unit 706 outputs a decision signal. In this embodiment, the process result of the symbol searching unit 706, i.e., the decision signal (estimate values of the desired signal and the decision signal) is fed back to the desired-signal transmission-path estimating unit 701 and the interference-signal transmission-path estimating unit 702.

The desired-signal transmission-path estimating unit 701 and the interference-signal transmission-path estimating unit 702 estimate the transmission path response matrix of the desired signal and the transmission path response matrix of the interference signal with the use of transmission path estimation using a training signal known in the receiver or any blind transmission path estimation technology in a first process. The processes in the combined-transmission-path matrix generating unit 703 to the symbol searching unit 706 are the same as those described in the first embodiment.

The decision signal acquired in the symbol searching unit 706 is input to the desired-signal transmission-path estimating unit 701 and the interference-signal transmission-path estimating unit 702. Responding to the decision signal, the desired-signal transmission-path estimating unit 701 and the interference-signal transmission-path estimating unit 702 performs the transmission path estimation again with the use of the decision signal. After repeating a predetermined number of times the operations circulating through the desired-signal transmission-path estimating unit 701, the combined-transmission-path matrix generating unit 703, the matrix calculating unit 704, the hypersphere generating unit 705, and the symbol searching unit 706, and circulating through the interference-signal transmission-path estimating unit 702, the combined-transmission-path matrix generating unit 703, the matrix calculating unit 704, the hypersphere generating unit 705, and the symbol searching unit 706 forming respective loops, the symbol searching unit 706 outputs the decision signal (estimate values of the desired signal and the decision signal).

According to this embodiment, since the transmission path estimation can be performed again using the determination values, highly accurate transmission path estimation can be performed even in an environment where the transmission path estimation cannot accurately be estimated in initial transmission path estimation. As a result, good demodulation characteristics can be acquired.

### Fifth Embodiment

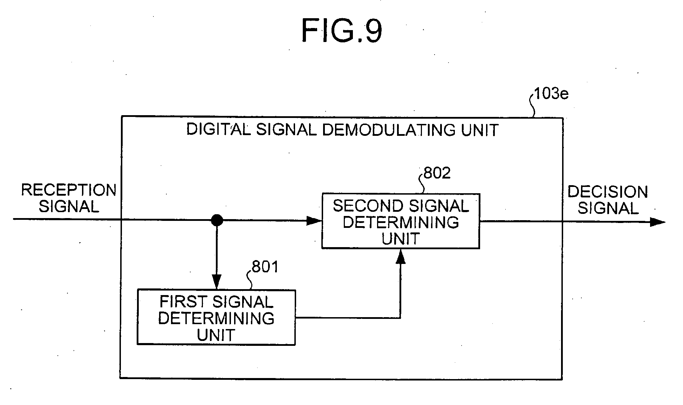

Fig. 9 is a block diagram of a principal part of a digital signal demodulating unit of a fifth embodiment according to the present invention. A digital signal demodulating unit 103e is a feature of this embodiment and includes two signal determining units, which are a first signal determining unit 801 and a second signal determining unit 802. The first signal determining unit 801 outputs a lower-dimensional decision signal as a process result. The second signal determining unit 802 inputs this signal as an initial value to output a decision signal.

The first signal determining unit 801 has the same configuration as that of the digital signal demodulating unit 103b .of the second embodiment shown in Fig. 4 and executes the equivalent process. However, the operations of the combined-transmission-path matrix generating unit and the desired component extracting unit are not limited to the operations described in the second embodiment and for example, the combined-transmission-path matrix generating unit does not need to execute such a process as allocating a component related to the reference signal to an element with a smaller column number and allocating a component related to the desired signal to an element with a,larger column number. The first signal determining unit 801 outputs a lower-dimensional decision signal as a process result.

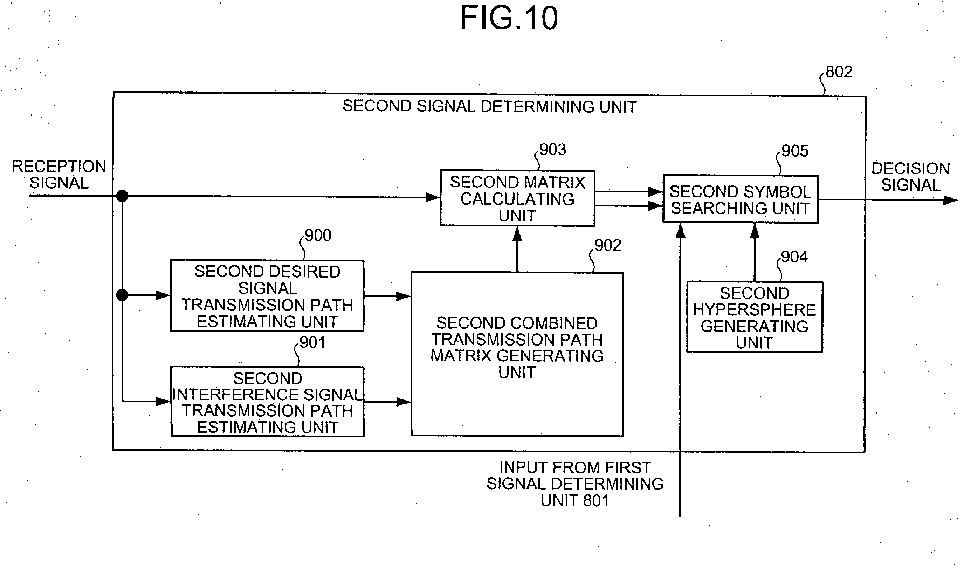

Fig. 10 is a block diagram of a principal part of the second signal determining unit 802 shown in Fig. 9. In Fig. 10, the outputs of the N A/D converting units 102-1 to 102-N (Fig. 1) are input to a second matrix calculating unit 903 as well as to a second desired-signal transmission-path estimating unit 900 and a second interference-signal transmission-path estimating unit 901. The outputs of the both transmission path estimating units 900 and 901 are input to a second combined-transmission-path matrix generating unit 902, the output of which is input to the second matrix calculating unit 903. In this embodiment, the output of the second matrix calculating unit 903, the output of a second hypersphere generating unit 904, and the output (the decision signal) of the first signal determining unit 801 are input to a second symbol searching unit 905. The second symbol searching unit 905 outputs a decision signal.

Although the second signal determining unit 802 has the same configuration as that of the digital signal demodulating unit 103 of the first embodiment shown in Fig. 2, differences are that the reception signal and the input from the first signal determining unit 801 are received and that the input decision signal is delivered to the second symbol searching unit 905 as an initial value. The second symbol searching unit 905 uses the input signal from the first signal determining unit 801 as an initial value of the decision signal to be estimated. As is the case with other embodiments, the second symbol searching unit 905 searches, for a most certain signal point as the decision signal, signal points existing within the hypersphere generated by the second hypersphere generating unit 904 centering on the reception signal point in the lattice point space created from the transmission signal candidates including the interference signal and the combined transmission path response matrix. The input signal from the first signal determining unit 801 is used as an initial value as described above and the signal points including this input signal are preferentially searched to shorten the process until reaching to the final decision signal. As a result, a highly accurate demodulating process can be realized with a lower calculation amount.

### Sixth Embodiment

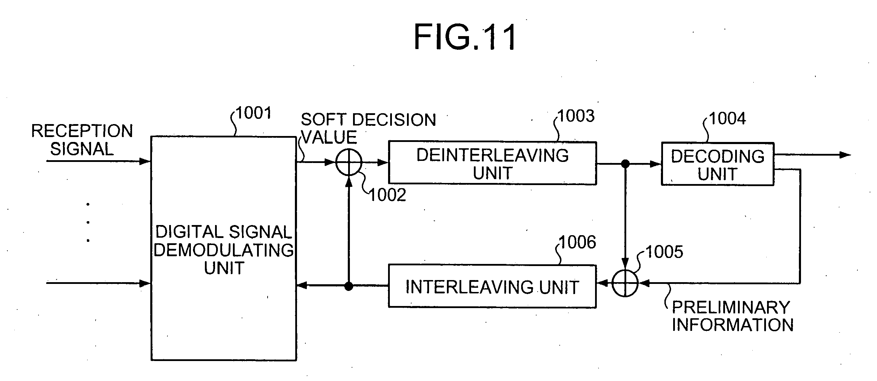

Fig. 11 is a block diagram of a principal part of a receiving apparatus of a sixth embodiment according to the present invention. In Fig. 11, the antennas 100-1 to 100-N, the analog signal processing units 101-1 to 101-N, and the A/D converting units 102-1 to 102-N are the same configuration as the receiving apparatus of the first embodiment shown in Fig. 1 and are omitted, and only the configuration after the A/D converting units 102-1 to 102-N is shown. The N A/D converting units 102-1 to 102-N (Fig. 1) are input to a digital signal demodulating unit 1001. A value obtained by subtracting by an adder 1002 preliminary information from a soft decision value output by the digital signal demodulating unit 1001 is input to a deinterleaving unit 1003. The output of the deinterleaving unit 1003 is input to a decoding unit 1004. Preliminary information output by the decoding unit 1004 is input to an interleaving unit 1006 after an adder 1005 subtracts a soft decision value. The output (preliminary information) of the interleaving unit 1006 is input to the digital signal demodulating unit 1001.

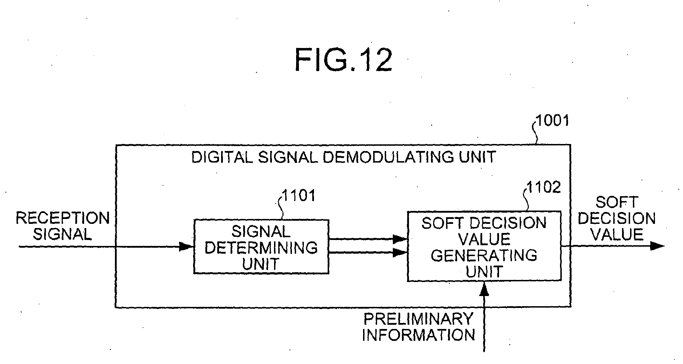

Fig. 12 is a block diagram of a principal part of a digital signal demodulating unit of the embodiment shown in Fig. 11. In Fig. 12, the digital signal demodulating unit 1001 includes a signal determining unit 1101 and a soft decision value generating unit 1102. The digital signal demodulating unit 1001 is a circuit having a function corresponding to the digital signal.demodulating unit 103 of the first embodiment shown in Fig. 2.. The decision signal (estimate value of the desired signal) output by the signal determining unit 1101 and the metrics calculated by the signal determination process are output to the soft decision value generating unit 1102. The soft decision value generating unit 1102 calculates a soft decision value for the decision value of the desired signal determined by the signal determining unit 1101 with the use of the preliminary information output from the decoding unit 1004 shown in Fig. 11 and delivered through the adder 1005 and the interleaving unit 1006. For example, a widely known mode of using a log likelihood ratio can be applied to a method of calculating the soft decision value performed by the soft decision value generating unit 1102.

The soft decision value output from the digital signal demodulating unit 1001 is sent to the deinterleaving unit 1003 after the adder 1002 subtracts the preliminary information input from the interleaving unit 1006. The deinterleaving unit 1003 executes an inverse process of the interleaving process used for the transmission signal and outputs the result to the decoding unit 1004. A so-called soft-input soft-output decoder such as SOVA (Soft Output Viterbi Algorithm) decoder or MAP (Maximum A posteriori Probability) decoder is used for the decoding unit 1004 to output the decode data and the preliminary information. The preliminary information is input to the interleaving unit 1006 after the adder 1005 subtracts the signal from the deinterleaving unit 1003. The interleaving unit 1006 executes for the preliminary information the same interleaving process as that used for the transmission signal and outputs the information to the signal determining unit 1101 and the adder 1002.

As is clear from Fig. 11, the above processes are repeatedly executed while exchanging the soft decision value and the preliminary information between the signal determining unit 1101,and the decoding unit 1004. After repeating a predetermined number of times, the final decoded data are acquired.

According to the present invention, since the decoding is performed with the use of the soft decision value, data reception can be performed with less error. Since the soft decision value and the preliminary information are exchanged between the signal determining unit 1101 and the decoding unit 1004 to repeatedly execute the demodulating/decoding process, the accuracy of the decision value is improved every time the process is repeated and good communication can be realized.

### Seventh Embodiment

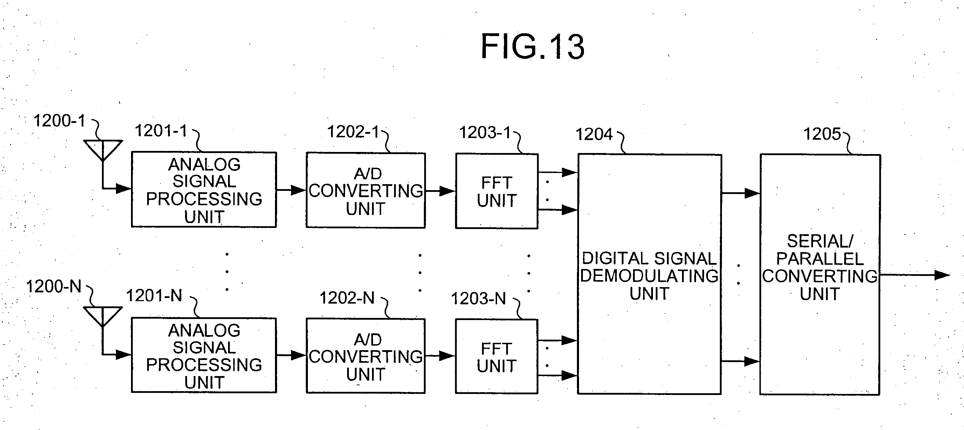

Fig. 13 is a block diagram of an overall configuration of a receiving apparatus of a seventh embodiment according to the present invention. In Fig.. 13, N elements (N is an integer not less than one) of antennas 1200-1 to 1200-N,are connected to N analog signal processing units 1201-1 to 1201-N, respectively. The N analog signal processing units 1201-1 to 1201-N are connected to N A/D converting units 1202-1 to 1202-N, respectively. The N A/D converting units 1202-1 to 1202-N are connected to N fast Fourier transforming units (hereinafter, FFT units) 1203-1 to 1203-N, respectively. The N fast Fourier transforming units 1203-1 to 1203-N are connected to a digital signal demodulating unit 1204. The digital signal demodulating unit 1204 is connected to a serial/parallel converting unit 1205 such that a plurality of outputs can be delivered.

In this embodiment, N elements of the antennas 1200-1 to 1200-N receives multi-carrier high-frequency analog signals such as OFDM (Orthogonal Frequency Division Multiplexing) or C-CDMA (Multi Carrier Code Division Multiple Access). The received multi-carrier high-frequency analog signals are down-converted in the analog signal processing units 1201-1 to 1201-N. The A/D converting units 1202-1 to 1202-N perform AD conversion for the input signals and outputs digital signals. The FFT units 1203-1 to 1203-N perform the discrete Fourier transform or the fast discrete Fourier transform for the digital signals to convert a time domain signal to a frequency domain signal for each subcarrier. The signal of each subcarrier is input to the digital signal demodulating unit 1204, which is a feature of this embodiment.

Although the digital signal demodulating unit 1204 has the same configuration as those described in, for example, the first to sixth embodiments, the process thereof is executed for each sub-carrier. The serial/parallel converting unit 1205 rearranges in parallel and outputs the demodulation data of each subcarrier estimated by the digital signal demodulating unit 1204.

According to the present invention,'the interference removal effect due to the application of the present invention can be acquired in multi-carrier signals such as OFDM and MC-CDMA. The range of the present invention is not limited to the illustrated configuration and the range includes all the possible configurations having the same effect.

### Eighth Embodiment

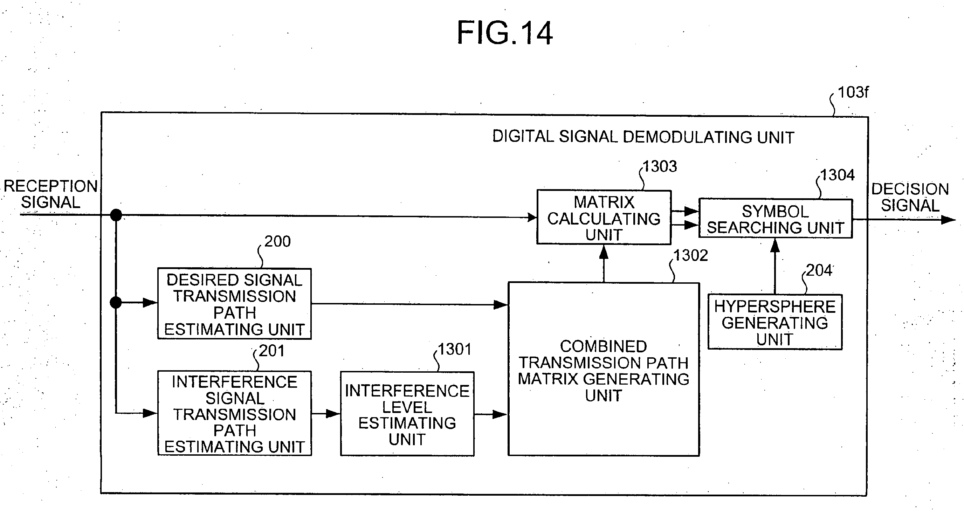

Fig. 14 is a block diagram of a principal part of a digital signal demodulating unit of a receiving apparatus of an eighth embodiment according to the present invention. In Fig. 14, the outputs of the N A/D converting units 102-1 to 102-N (Fig. 1) are input to a matrix calculating unit 1303 of a digital signal demodulating unit 103f as well as to the desired-signal transmission-path estimating unit 200 and the interference-signal transmission-path estimating unit 201. The output of the desired-signal transmission-path estimating unit 200 is input to a combined-transmission-path matrix generating unit 1302. The output of the interference-signal transmission-path estimating unit 201 is input to an interference level estimating unit 1301. The output of the interference level estimating unit 1301 is input to the combined-transmission-path matrix generating unit 1302. The output of the combined-transmission-path matrix generating unit 1302 is input to the matrix calculating unit 1303. The outputs of the matrix calculating unit 1303 and the hypersphere generating unit 204 are input to a symbol searching unit 1304. The symbol searching unit 1304 outputs a decision signal. A feature of the receiving apparatus of this embodiment is in the interference level estimating unit 1301, the combined-transmission-path matrix generating unit 1302, and the matrix calculating unit 1303 of the digital signal demodulating unit 103f. Other constituent elements are generally the same as the first embodiment.

The desired-signal transmission-path estimating unit 200 and the interference-signal transmission-path estimating unit 201 execute the same processes as,the first embodiment to estimate the transmission path response matrices. The estimated transmission path response matrix of the interference signal is delivered to the interference level estimating unit 1301. The interference level estimating unit 1301 estimates power information of the interference signal arriving at the receiving apparatus based on the transmission path response information of the interference signal and outputs to the combined-transmission-path matrix generating unit 1302 only the transmission path response information of the interference signal having strong power such as indicating a value greater than noise power. The estimation of the power information of the interference signal may be realized by calculating a square value of each elements of the transmission path response information of the interference signal, for example.

The combined-transmission-path matrix generating unit 1302 combines the transmission path response information of the desired signal output from the desired-signal transmission-path estimating unit 200 with the transmission path response information of the interference signal having strong power output from the interference level estimating unit 1301 to generate one combined transmission path response matrix having a larger size. If it is determined that no high-level interference signal exists as a result of estimation of information related to the interference signal power in the interference level estimating unit 1301, the combined-transmission-path matrix generating unit 1302 accordingly generates information by only copying the transmission path response matrix of the desired signal for the combined transmission path response matrix.

Although the functions of the matrix calculating unit 1303 and the symbol searching unit 1304 are basically the same as those of the matrix calculating unit 203 and the symbol searching unit 205 shown in Fig. 2, a difference in this embodiment is that the number of interference signals considered in the combined-transmission-path matrix generating unit 1302 and subsequent units is varied due to the process of the interference level estimating unit 1301.

According to the present invention, since the number of the interference signals to be considered may be varied depending on the intensity of the arriving interference signals, the interference removal effect can be acquired while constraining the estimation errors even when the levels of the interference signals are changed by fluctuations of the propagation environment, etc. Since the possibility of considering the extra number of interference signals is reduced when a small number of interference signals arrives, a process amount can be reduced. The present invention is not limited to this configuration and the range thereof includes all the possible configurations having the same effect. For example, this embodiment is applicable to the configuration described in the second and third embodiments. The interference level estimating unit 1301 does not have to be disposed on the subsequent stage of the interference-signal transmission-path estimating unit 201 and may be disposed at any position as long as the function thereof is satisfied.

### Ninth Embodiment

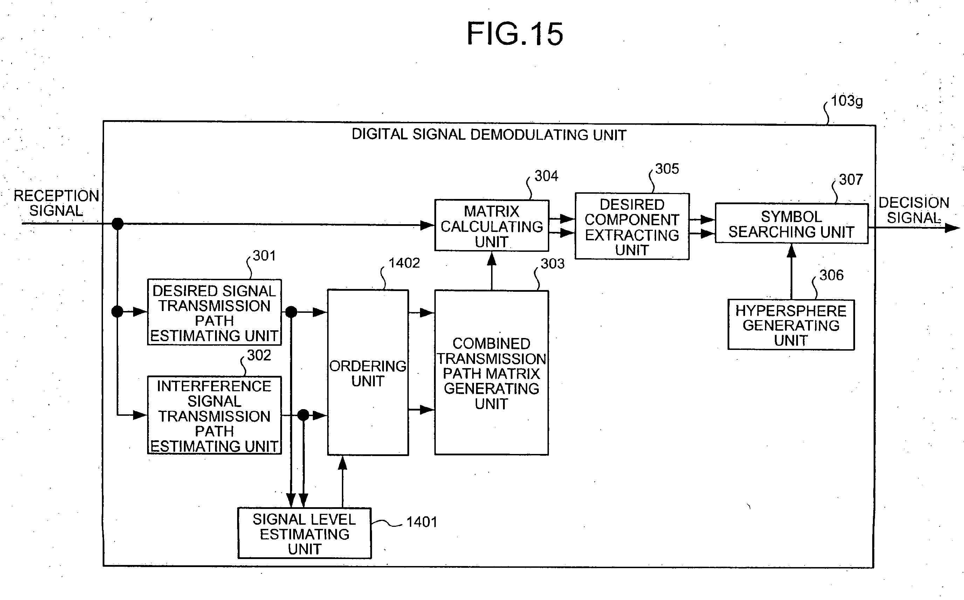

Fig. 15 is a block diagram of a principal part of a digital signal demodulating unit of a receiving apparatus of a ninth embodiment according to the present invention. In Fig. 15, the outputs of the N A/D converting units 102-1 to 102-N (Fig. 1) are input to the matrix calculating unit 304 of a digital signal demodulating unit 103g as well as to the desired-signal transmission-path estimating unit 301 and the interference-signal transmission-path estimating unit 302. The outputs of the desired-signal transmission-path estimating unit 301 and the interference-signal transmission-path estimating unit 302 are input to an ordering unit 1402 as well as a signal level estimating unit 1401. The output of the signal level estimating unit 1401 is input to the ordering unit 1402. The output of the ordering unit 1402 is input to the combined transmission path response matrix generating unit 303. The output of the combined-transmission-path matrix generating unit 303 is input to the matrix calculating unit 304. The output of the matrix calculating unit 304 is input to a desired component extracting unit 305. The outputs of the desired component extracting unit 305 and the hypersphere generating unit 306 are input to the symbol searching unit 307. The symbol searching unit 307 outputs a decision signal. A feature of the receiving apparatus of this embodiment is included in the signal level estimating unit 1401 and the ordering unit 1402. Other constituent elements are generally the same as those of the second embodiment.

In this embodiment, the desired-signal transmission-path estimating unit 301 and the interference-signal transmission-path estimating unit 302 estimate the transmission path response matrices in the same process as the second embodiment. The estimated transmission path response matrices are output to the signal level estimating unit 1401 and the ordering unit 1402. The signal level estimating unit 1401 estimates information about power of the desired signal and the interference signal and delivers the information to the ordering unit 1402. The ordering unit 1402 uses the desired signal input from the signal level estimating unit 1401 and the information about power of the interference signal to order the transmission path response matrices estimated by the desired-signal transmission-path estimating unit 301 and the interference-signal transmission-path estimating unit 302. When the ordering is performed, the ordering is properly performed with reference to the information about the power of the desired and interference signals such that the elements become large in the upper triangular matrix reconfigured to a lower dimension acquired as a result of the processes of the combined-transmission-path matrix generating unit 303, the matrix calculating unit 304, and the desired component extracting unit 305 on the subsequent stage. The result of the ordering and the transmission path response matrices are output to the combined-transmission-path matrix generating unit 303. The combined-transmission-path matrix -generating unit 303 reflects the ordered result to combine the transmission path response matrix of the desired signal with the transmission path response matrix of the interference signal and generates one combined transmission path response matrix having a larger size, which is output to the matrix calculating unit 304. The Subsequent processes are the same as the second embodiment.

According to the present invention, since the elements in the upper triangular matrix become large after extracting the desired components, the signal detection accuracy is improved and a better interference removal capability and communication quality can be provided. The symbol searching process of the symbol searching unit 307 quickly converges when a signal-power/noise-power ratio is large in a model to be considered. Since a signal-power/noise-power ratio becomes large if the elements in the upper triangular matrix are large, this embodiment can reduce a process amount required for the interference removal and the detection of the desired signal. Therefore, this embodiment is useful in a configuration not including the desired component extracting unit 305, for example, the configuration illustrated in the first embodiment from a viewpoint of the reduction of the calculation process amount.

This embodiment is also applicable to the configuration illustrated in the third embodiment. In this case, the configuration shown in this embodiment is applied to the first signal determining unit 401 of Fig. 5, and the replica subtracting unit 402 subtracts the acquired decision signal from the reception signal. Since this improves the accuracy of the decision signal that is a process result of the first signal determining unit 401, the determination error in the first signal determining unit 401 is less likely to be propagated to the second signal determining unit 403 on the subsequent stage and the accuracy of the finally acquired decision signal is considerably improved.

### Tenth Embodiment

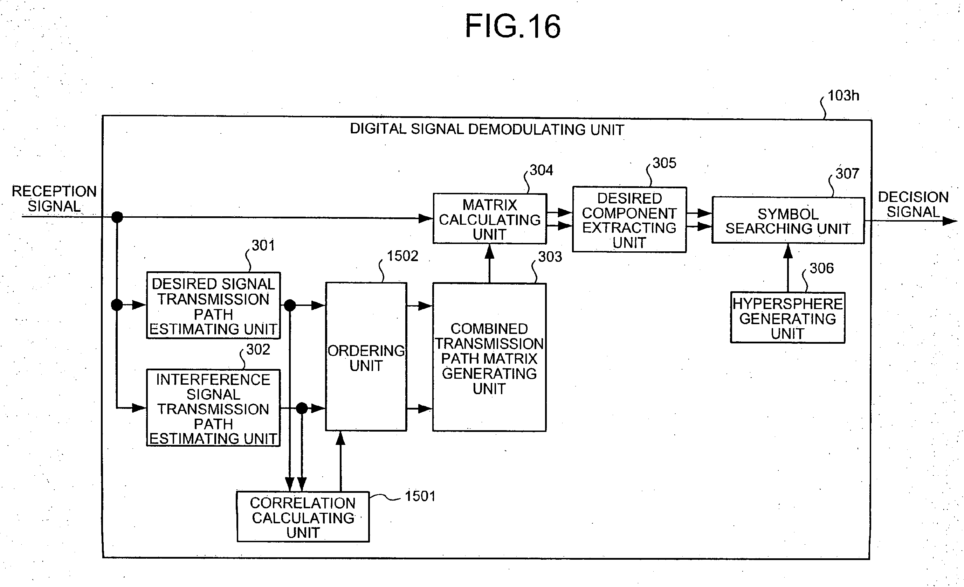

Fig. 16 is a block diagram of a principal part of a digital signal demodulating unit of a receiving apparatus of a tenth embodiment according to the present invention. In Fig. 16, the same reference numerals are added to elements having the same functions as the ninth embodiment shown in Fig. 15 and the description thereof will be omitted: This embodiment is different from the ninth embodiment in that the digital signal demodulating unit 103h includes a correlation calculating unit 1501 to operate the ordering unit 1502 based on the process result of the correlation calculating unit 1501.

The correlation calculating unit 1501 calculates correlation information of transmission path responses between the transmission antennas for all the transmission path responses including the estimated desired and interference signals and places transmission path information highly independent from other vectors at the forefront of the matrix. This can be realized, for example, by process procedures of decomposing each transmission path response matrix into column vectors, calculating inner products of sums of one column vector and other column vectors for all the combinations, and sorting the combinations in ascending order from the smallest inner product.. The calculation result of the correlation calculating unit 1501 is output to the ordering unit 1502.

The ordering unit 1502 uses the calculation result of the correlation calculating unit 1501 to sort and output the input transmission path response matrices to the combined-transmission-path matrix generating unit 303. The processes of the combined-transmission-path matrix generating unit 303 and subsequent units are executed in the same way as those of the second embodiment. By ordering elements of the transmission path response matrix, elements with greater row numbers and column numbers have larger values in the upper triangular matrix that is a process result of the matrix calculating unit 304. As a result, the symbol searching process can be executed with the use of more reliable information after the reconfiguration into a lower-dimensional matrix in the desired component extracting unit 305.

According to the present invention, since the ordering is performed using the correlation information between the elements of the transmission path response matrix, reliable information can be collected from a matrix after the reconfiguration into a lower-dimensional matrix, and the highly accurate interference removal effect and signal detection can be performed. A process amount can be reduced in the symbol searching unit 307. This present invention is applicable not only to this embodiment but also to a configuration without the desired component extracting unit 305, for example. In this case, the effect of reducing the process amount of the symbol searching unit 307 can be realized. The process details and configuration of the correlation calculating unit 1501 are not limited to the configuration illustrated in Fig. 16, and all the possible configurations fall within the range of the present invention.

### INDUSTRIAL APPLICABILITY

As described above, a receiving apparatus of the present invention is suitable for a communication system where an interference signal transmitted using the same frequency band arrives along with a desired signal and is preferably applied to a mobile communication network, for example.

## Claims

1. A receiving apparatus, comprising:
one or more element antennas that receive high-frequency analog signals;
an analog signal processing unit that down-converts each of a plurality of the high-frequency analog signals;
an A/D converting unit that converts each of the down-converted analog signals into a digital signal; and
a digital signal demodulating unit that demodulates a plurality of the converted digital signals into a predetermined digital signal, wherein
the digital signal demodulating unit includes
a desired-signal transmission-path estimating unit that performs transmission path response matrix estimation for a desired signal;
an interference-signal transmission-path estimating unit that performs transmission path response matrix estimation for an interference signal;
a combined-transmission-path matrix generating unit that combines the estimated transmission path response matrix of the desired signal and the estimated transmission path response matrix of the interference signal to generate a combined transmission path response matrix;
a matrix calculating unit that converts into an upper triangular matrix the combined transmission path response matrix after the combining;
a hypersphere generating unit that generates a hypersphere centering on a reception signal point in a lattice point space; and
a symbol searching unit that forms the lattice point space from the combined transmission path response matrix converted into the upper triangle, the symbol searching unit searching lattice points present in the hypersphere for a lattice point having the smallest metric to the reception signal point o determine the lattice point as estimate values of the desired signal and interference signal.

2. The receiving apparatus according to claim 1, wherein
the digital signal demodulating unit further includes a desired component extracting unit disposed on a stage after the combined-transmission-path matrix generating unit, the desired component extracting unit extracting a predetermined number of signals from the combined transmission path response matrix to reconfigure a matrix.

3. The receiving apparatus according to claim 1, wherein
the symbol searching unit outputs not only the estimate values of the desired signal and interference signal but also metrics of the estimate values, and
the digital signal demodulating unit further includes
a replica subtracting unit that creates a replica of the interference signal from the estimate value of the interference signal and subtracts the replica from the reception signal;
a second desired-signal transmission-path estimating unit that performs a transmission path response matrix estimation for the desired signal from the reception signal with the replica subtracted;
a second matrix calculating unit that converts the estimated transmission path response matrix into an upper triangular matrix;
a second hypersphere generating unit that generates a hypersphere centering on a reception signal point in a second lattice point space; and
a second symbol searching unit that forms the second lattice point space from the transmission path response matrix converted into the upper triangle and searches lattice points present in the hypersphere for a lattice point having the smallest metric to the reception signal point to determine the lattice point as estimate values of the desired signal and interference signal.

4. The receiving apparatus according to claim 1, wherein
the estimate values of the desired signal and interference signal are output and fed back by the symbol searching unit, wherein when receiving the fed-back estimate value of the desired signal, the desired-signal transmission-path estimating unit performs the transmission path response matrix estimation for the desired signal again by using the received estimate value, wherein
when receiving the fed-back estimate value of the interference signal, the interference-signal transmission-path estimating unit performs the transmission path response matrix estimation for the desired signal again by using the received estimate value, and wherein
after repeating a predetermined number of times the operations of the desired-signal transmission-path estimating unit, the interference-signal transmission-path estimating unit, the combined-transmission-path matrix generating unit, the matrix calculating unit, the hypersphere generating unit, and the symbol searching unit, which form a loop, the symbol searching unit outputs the estimate values of the desired signal and interference signal.

5. The receiving apparatus according to claim 1, wherein
the digital signal demodulating unit further includes
a second desired-signal transmission-path estimating unit that performs a transmission path response matrix estimation for the desired signal;
a second interference-signal transmission-path estimating unit that performs a transmission path response matrix estimation for the interference signal;
a second combined-transmission-path matrix generating unit that combines the estimated transmission path response matrix of the desired signal and the transmission path response matrix of the interference signal to generate a second combined transmission path response matrix;
a second matrix calculating unit that converts into an upper triangular matrix the second combined transmission path response matrix after the combining;
a second hypersphere generating unit that generates a second hypersphere centering on a reception signal point in a second lattice point space; and
a second symbol searching unit that receives the estimate values output by the symbol searching unit, forms the second lattice point space from the second combined transmission path response matrix converted into the upper triangle, and searches lattice points present in the second hypersphere for a lattice point having the smallest metric to the reception signal point with the received estimate values used as initial values to determine the lattice point as estimate values of the desired signal and interference signal.

6. The receiving apparatus according to claim 1, wherein
the digital signal demodulating unit further includes
a soft decision value generating unit that calculates a soft decision value for the estimate value of the desired signal from preliminary information and the estimate value of the desired signal output by the symbol searching unit;
a deinterleaving unit that performs deinterleaving of a value obtained by subtracting the preliminary information from the soft decision value;
a decoding unit that performs soft-input soft-output decoding for the deinterleaved soft decision value to generate the preliminary information and to output decoded data; and
an interleaving unit that performs interleaving of a value obtained by subtracting a soft decision value output from the deinterleaving unit from the preliminary information to input the value to the digital signal demodulating unit, and wherein
after repeating a predetermined number of times a series of operations performed by the soft decision value generating unit, the deinterleaving unit, the decoding unit, and the interleaving unit, which form a loop, the decoding unit outputs the decoded data.

7. The receiving apparatus according to claim 1, further comprising:
a fast Fourier transforming unit disposed on a subsequent stage of the A/D converting unit to perform discrete transform for an input digital signal to convert a discrete-time signal into a frequency region signal for each subcarrier, the frequency region signal being input to the digital signal demodulating unit; and
a serial/parallel converting unit that sorts demodulation data demodulated for each subcarrier by the digital signal demodulating unit in a predetermined order.

8. The receiving apparatus according to claim 1, wherein
the digital signal demodulating unit further includes an interference level estimating unit that reduces the number of signals of the transmission path response matrix of the estimated interference signal to the number of signals having a value greater than noise power, and wherein
the combined-transmission-path matrix generating unit combines the estimated transmission path response matrix of the desired signal with the transmission path response matrix of the interference signal reduced by the interference level estimating unit to generate a combined transmission path response matrix.

9. The receiving apparatus according to claim 1, wherein
the digital signal demodulating unit further includes an ordering unit that sorts the estimated transmission path response matrix of the desired signal and the transmission path response matrix of the interference signal in an appropriate order, and wherein
the combined-transmission-path matrix generating unit combines the sorted transmission path response matrix of the desired signal with the sorted transmission path response matrix of the interference signal to generate a combined transmission path response matrix.

10. The receiving apparatus according to claim 9, wherein
the digital signal demodulating unit further includes a signal level estimating unit that estimates a level of the desired signal and a level of the interference signal from the estimated transmission path response matrix of the desired signal and the estimated transmission path response matrix of the interference signal, respectively, and
the ordering unit sorts the transmission path response matrix of the desired signal and the transmission path response matrix of the interference signal in an appropriate order based on the level of the desired signal and the level of the interference level.

11. The receiving apparatus according to claim 9, wherein
the digital signal demodulating unit further includes a correlation calculating unit that calculates a correlation between elements of the estimated transmission path response matrix of the desired signal and the estimated transmission path response matrix of the interference signal, and
the ordering unit sorts the transmission path response matrix of the desired signal and the transmission path response matrix of the interference signal in an appropriate order based on the correlation between the elements of the estimated transmission path response matrix of the desired signal and the estimated transmission path response matrix of the interference signal.
